# EUROPEAN PATENT SPECIFICATION

(11) **EP 2 091 781 B1**
(45) Date of publication and mention of the grant of the patent: **24.08.2016**
(21) Application number: 07824783.0
(22) Date of filing: 03.12.2007
(51) Int. Cl.: B60P 3/035, B65G 67/20

(54) **LOADING SYSTEM**
LADESYSTEM
SYSTÈME DE CHARGEMENT

(30) Priority: 01.12.2006 GB 0624077
(43) Date of publication of application: 26.08.2009
(73) Proprietor: Joloda International Ltd, Garston, Liverpool L19 2NZ (GB)
(72) Inventor: WARD, Peter A., Garston Liverpool L19 2NZ (GB); KORDEL, Wojtek, Garston Liverpool L19 2NZ (GB)
(74) Representative: Exell, Jonathan Mark
(86) International application number: PCT/GB2007/004626
(87) International publication number: WO 2008/065435

(56) References cited:
- EP-A- 0 312 042
- EP-A- 1 081 070
- EP-A1- 0 103 999
- DE-A1- 3 905 641
- US-A- 4 102 274

## Description

This application is concerned with a loading system for loading goods on to and off vehicles, and, more particularly but not exclusively, with a system for loading paper reels from a paper mill into a lorry and then unloading the paper reels at a printing press.

EP 0312042 shows the preamble of claim 1 and discloses a pneumatic walking beam conveyor for loading and unloading transport vehicles with pallets, boxes, barrels and the like by lifting and rhythmic conveying of the beams.

According to the present invention, there is provided a vehicle as claimed in claim 1. In one embodiment, the vehicle may be a lorry (or the trailer of an articulated lorry).

One advantage of the present invention is that it allows reels to be transported horizontally in a lorry rather than vertically (i.e. standing up) in a lorry. This allows the height of the centre of gravity of the loaded lorry to be reduced compared to the height of the centre of gravity of a lorry that is transporting vertical reels. This reduction in the height of the centre of gravity improves the stability and thus safety of the loaded lorry.

Another advantage of the present invention is that the horizontally mounted reels maybe rapidly loaded into, and unloaded from, a lorry.

Another advantage of the present invention is that the horizontally mounted reels maybe loaded (and/or unloaded) from the sides and/or from the rear of the lorry. Side loading/unloading allows the lorry to be loaded/unloaded without requiring a dock.

Another advantage of the present invention is improved safety when loading/unloading reels from the sides of a lorry.

### DESCRIPTION OF THE DRAWINGS

Figure 1 shows the rear end of a trailer (which may be attached to a cab unit, not shown, of an articulated lorry).
Figure 2 shows the rear end of the trailer, with drop side chocks of the trailer partially rotated downwards.
Figure 3 shows the rear end of the trailer with the drop side chocks fully down, exposing the sides of the trailer.
Figure 4 shows the left side of the trailer with the drop side chocks fully down.
Figure 5 shows the rear end of the trailer, and a reel of paper being loaded onto the trailer.
Figure 6 shows reels loaded side-by-side on the trailer and shows drop side chocks on the right hand side of the trailer in the raised position.
Figure 7 shows reels loaded side-by-side on the trailer and shows drop side chocks on both sides of the trailer in the raised position.
Figure 8A shows a top view of a dock including skates and conveyors, Figure 8B shows a side view of the dock and Figure 8C shows an end view of the dock.
Figure 9A shows a top view of the dock, and also shows the trailer of Figures 1-7 docked with the dock. Figure 9B shows a side view of the trailer docked with the dock.
Figure 10 shows a view of the trailer (in the plane X-X' of Figure 9A, but does not show any portions of the dock) after the skates from the dock have been inserted into the trailer.
Figure 11 shows a region XI of Figure 10 in more detail.
Figure 12 shows air sacs in the skates and in lift assist beams being used to lift reels up off the chocks.
Figure 13 shows a region XIII of Figure 12 in more detail.
Figure 14 is similar to Figure 12 but after the air sacs in the lift assist beams have been deflated (in order to lower the lift assist beams).
Figure 15 shows a view in the plane XV-XV' of Figure 8A, and shows adjacent reels (the reels are touching and are supported by skates) that have been loaded onto the dock.
Figure 16 is similar to Figure 15 but after the air sacs in the skates have been deflated (in order to lower the skates), and shows the reels supported by the conveyors (the reels are no longer touching).
Figure 17 shows the region XVII of Figure 16 in more detail.
Figure 18 shows an arrangement of reels in the trailer when reels of a different length (to that shown in Figure 4) are used.
Figure 19 shows adapters that cooperate with the trailer in order to transport reels of different diameter to the reels shown at Figure 6.

### DESCRIPTION OF A FIRST EMBODIMENT

The first embodiment comprises a trailer which forms part of an articulated lorry. The trailer is used to transport reels horizontally. The trailer may be loaded and/or unloaded from the sides of the trailer. The trailer may also be loaded and/or unloaded from a rear end of the trailer. The first embodiment also comprises an unclaimed dock which may be used to load/unload reels longitudinally via the rear end of the trailer.

The trailer will be described for this embodiment as being loaded from the side with reels and will then be described being unloaded (in conjunction with the dock) longitudinally from the rear end of the trailer.

Of course, the operations could be reversed so as to load the trailer longitudinally and then unload the trailer from the sides. Alternatively, the trailer could be loaded and unloaded from the sides or could be loaded and unloaded longitudinally.

### SIDE LOADING

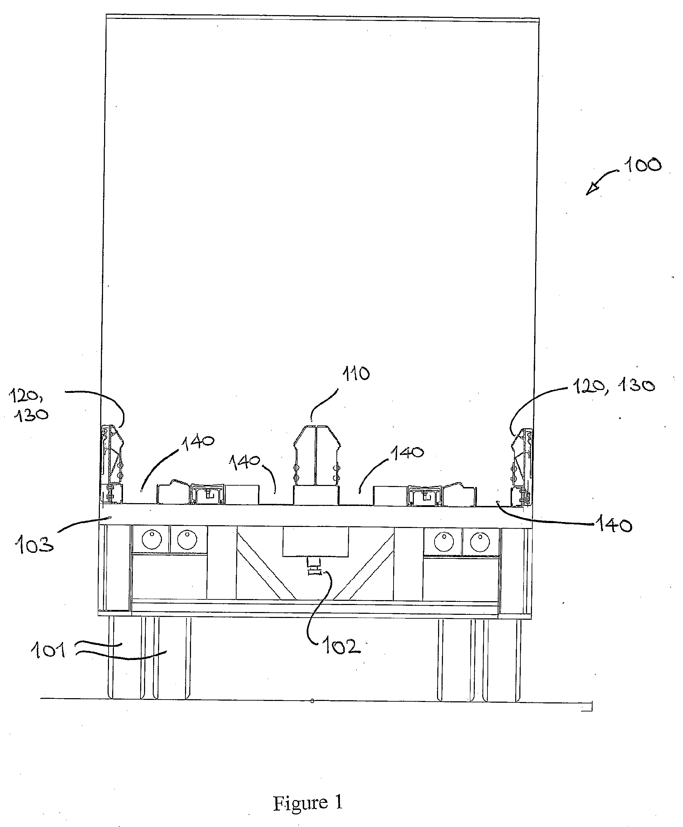

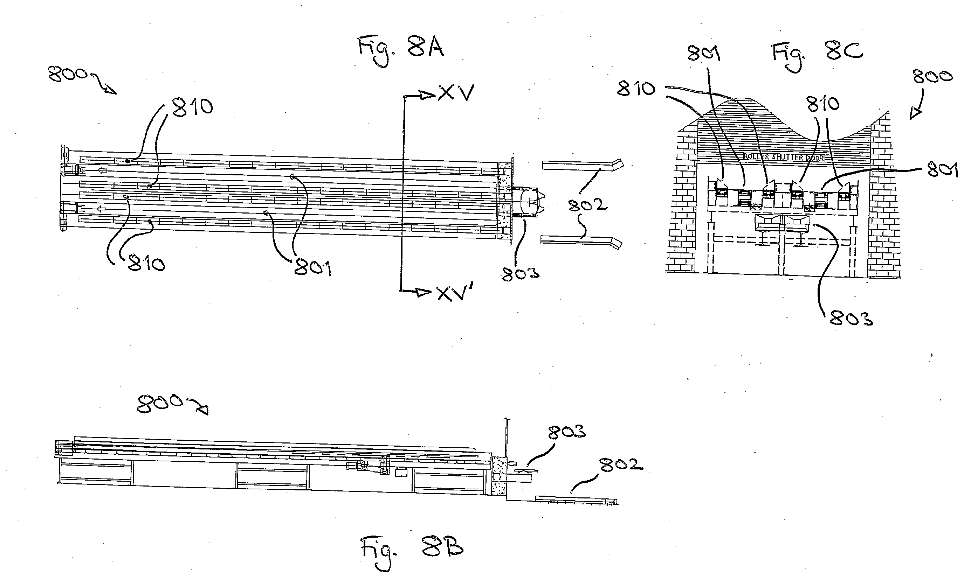

Figure 1 shows a rear view of a trailer 100 having wheels 101 and a "fifth wheel" pin 102 (for use in conjunction with a "fifth wheel" assembly, see Figure 8).

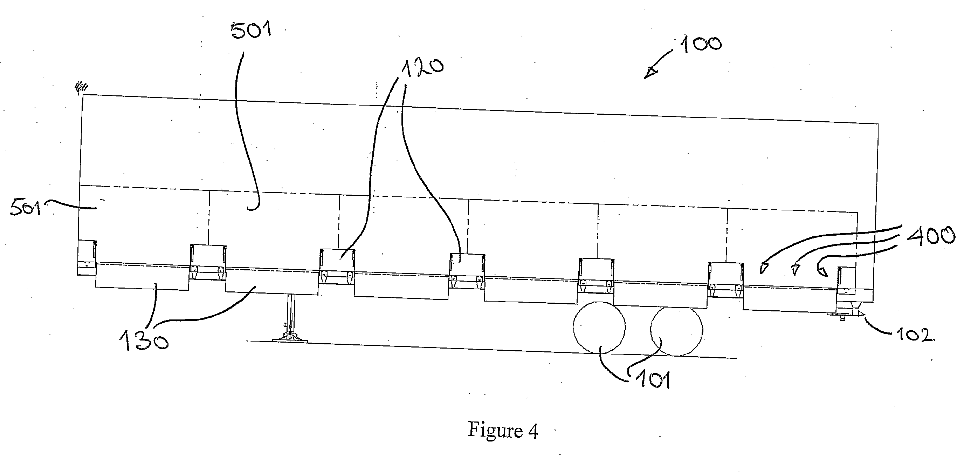

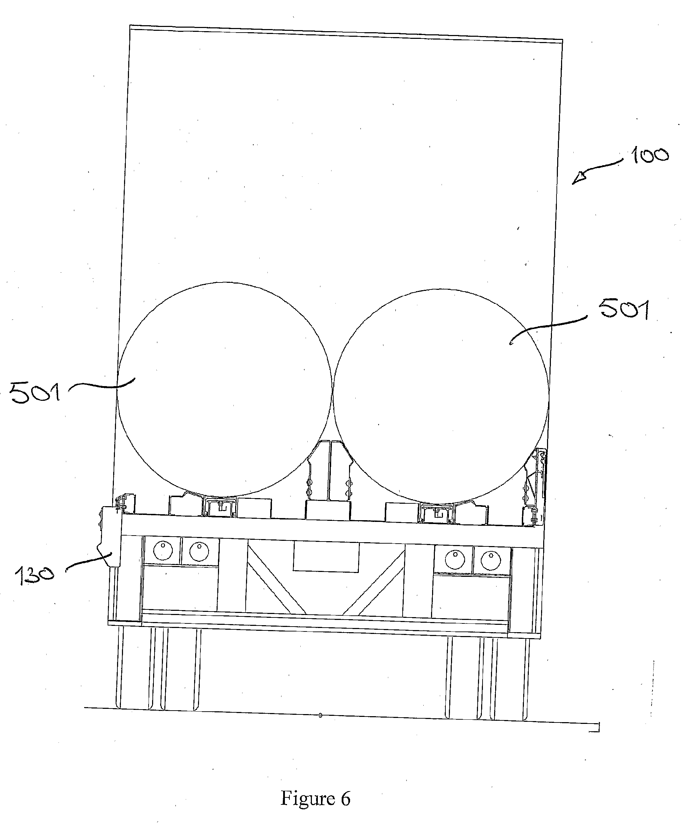

Along the longitudinal centre of the trailer 100 there is a centre chock 110. Along the sides of the trailer 100 there are fixed side chocks 120 and drop side chocks 130 (see Figure 4 for more details of the side fixed chocks 120 and the drop side chocks 130). The centre chock 110, fixed side chocks 120 and drop side chocks 130 prevent reels from moving sideways (see Figure 6) during transport of the reels. The centre chock 110, fixed side chock 120 and drop side chock 130 are all mounted to a bed 103 of the trailer 100. In this embodiment, the bed 103 is at a height of 1.25m above the ground.

The trailer 100 has four skate guides 140 which will be discussed in connection with the longitudinal unloading of the trailer 100.

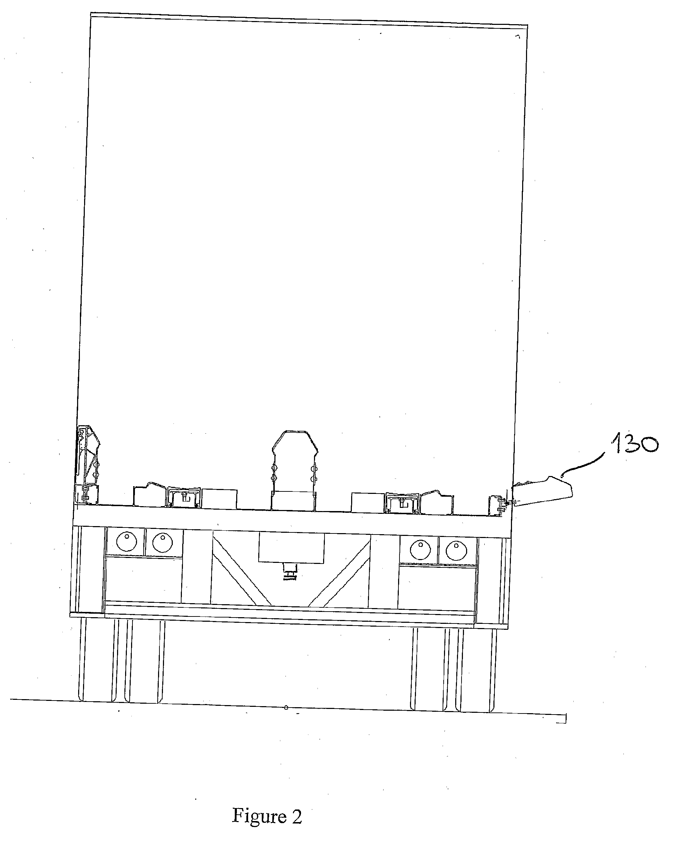

Figure 2 shows the drop side chocks 130 partially rotated downwards around hinges (not shown) to partially expose the sides of the trailer 100 for side loading.

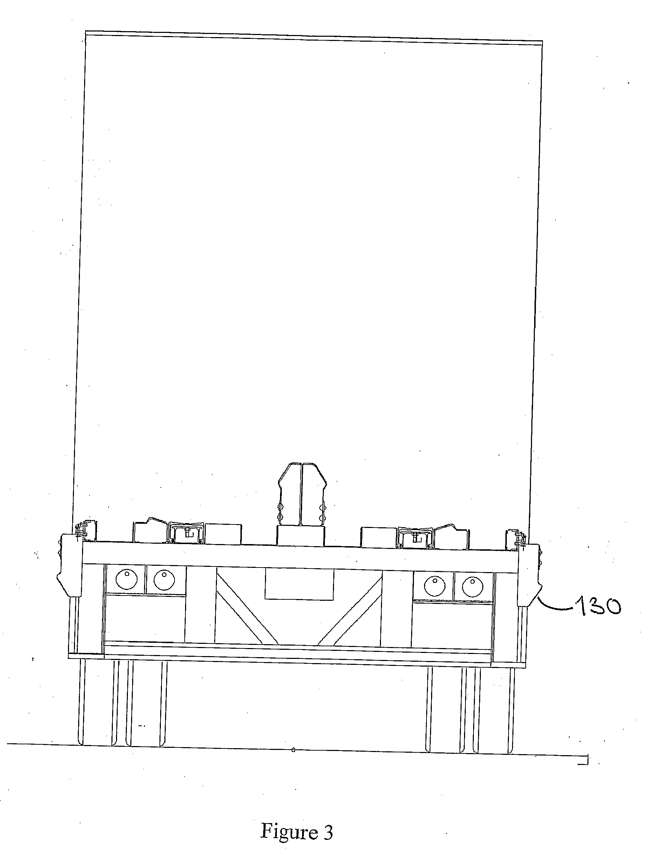

Figure 3 shows the drop side chocks 130 fully dropped down so that the trailer 100 is ready for side loading.

Figure 4 shows a side view of the trailer 100 and shows that, because the drop side chocks 130 have been lowered, there are access regions 400 between adjacent pairs of fixed side chocks 120. Figure 4 shows, in phantom lines, six reels 501 longitudinally arranged along one side of the trailer 100.

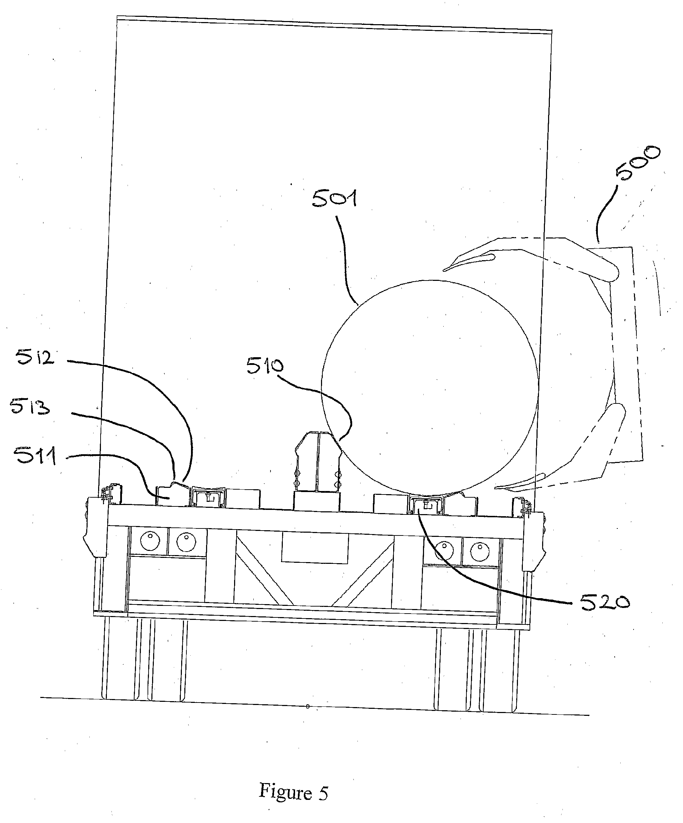

Figure 5 shows the jaws 500 of a clamp truck (the clamp truck is not shown) being used to load a reel 501 into the lorry 100. As shown, the reel 501 is substantially cylindrical and has a cylindrical axis running longitudinally through the centre of the reel 501. Once loaded, the reel 501 bears against: (i) a chock surface 510 of the centre chock 110 and (ii) a loading chock 511 in combination with a lift assist beam 520. The centre of the reel 501 lies vertically above the lift assist beam 520.

A function of the loading chock 511 is to prevent reels 501 rolling off the trailer 100 during side loading/unloading of the trailer 100. The loading chock 511 has a loading chock surface 512. At an upper portion of the loading chock surface 512 there is a loading chock ridge 513. The loading chock ridge 513 is higher than the lift assist beam 520 and thus the reel 501 is held captive within the trailer 100 by gravity. Once a reel 501 has been loaded into the trailer 100, it is possible that the trailer 100 will tip downwards slightly on the side carrying the reel 501 (this is due to compliance in the suspension of the trailer 100). Such a tilt (not shown) of the trailer 100 could (were it not for the loading chock ridge 513) cause the reel 501 to roll off the lorry 100; the loading chock ridge 513 prevents the reel 501 from rolling off the trailer 100.

The loading chock 511 is mounted to the bed 103 and extends longitudinally along the trailer 100. The longitudinal axis of the loading chock 511 is spaced apart from the longitudinal axis of the centre chock 110 so that, once a reel 501 has been loaded, the loading chock 511 prevents the reel 501 from rolling clockwise (that is, as viewed in Figure 5) and falling out of the trailer 100. Another loading chock 511 is provided symmetrically on the other side of the trailer 100 and prevents a reel (not shown) from rolling anticlockwise and falling out of the trailer 100. Similarly, another lift assist beam 520 is provided symmetrically on the other side of the trailer 100.

Figure 6 shows the trailer 100 once two reels 501 have been loaded into the trailer 100.

Additional reels 501 maybe loaded into the trailer 100. For example, Figure 4 shows that six reels maybe loaded onto each side of the trailer 100, giving a total of twelve reels.

If the trailer 100 is to be used to transport reels of paper then the reels may accord with IFRA tolerance standards. For example, the reels may have a diameter of 1.270m (metres), a length of 2.211m and a mass (i.e. weight) of 2,200kg (kilograms) per reel. As those skilled in the art will appreciate, other standard lengths are 0.737m, 1.100m, 1.474m and 1.837m.

Figure 6 shows that the drop side chocks 130 may be rotated upwards around their hinges and fastened to the fixed side chocks 120. Once the drop side chocks 130 have been fastened to the fixed side chocks 120, each side of the trailer 100 forms a chock.

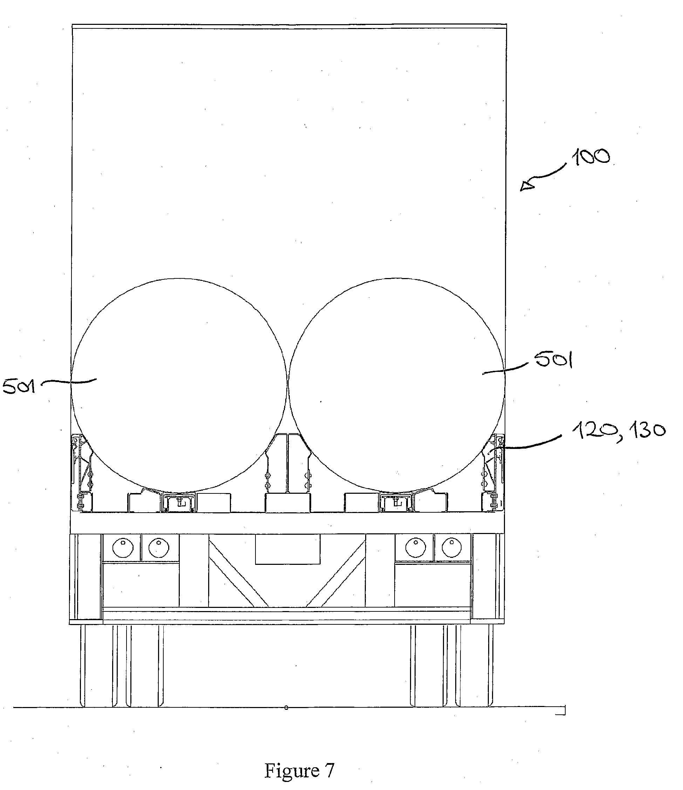

Figure 7 shows that, once the drop side chocks 130 have been raised, the reels 501 are supported by the centre chock 110, fixed chocks 120, drop side chocks 130 and lift assist beams 520 (some of the weight of the reels 501 may also be supported by the loading chock 511). As can be seen, in this embodiment, the reels 501 are side by side and are touching along their sides, above the centre chock 110.

In this embodiment, the trailer 100 has width of 2.55m. The reels 501 are supported by the lift assist beams 520 so that the lowermost portions of the reels 501 are at a height of 1.357m above the ground.

### LONGITUDINAL UNLOADING

Figures 8A, 8B and 8C show plan, side and end views, respectively, of a dock 800. The dock 800 may interact with the trailer 100 (not shown) in order to unload reels 501 from the trailer 100. In this embodiment, the dock 800 forms part of a printing factory site (the remainder of the printing factory site, and printing presses within the printing factory site, are not shown).

As shown most clearly by Figure 8A, the dock 800 has two conveyors 801 which receive reels 501 and then convey the reels 501 to printing presses (not shown). The dock 800 has wheel guides 802 which guide the wheels 101 of the trailer 100 (when the trailer 100 is being reversed towards the dock 800), thus aligning the trailer 100 relative to the dock 800. The dock 800 also has a "fifth wheel" assembly 803 which engages with the fifth wheel pin 102, thus securing and aligning the trailer 100 relative to the dock 800.

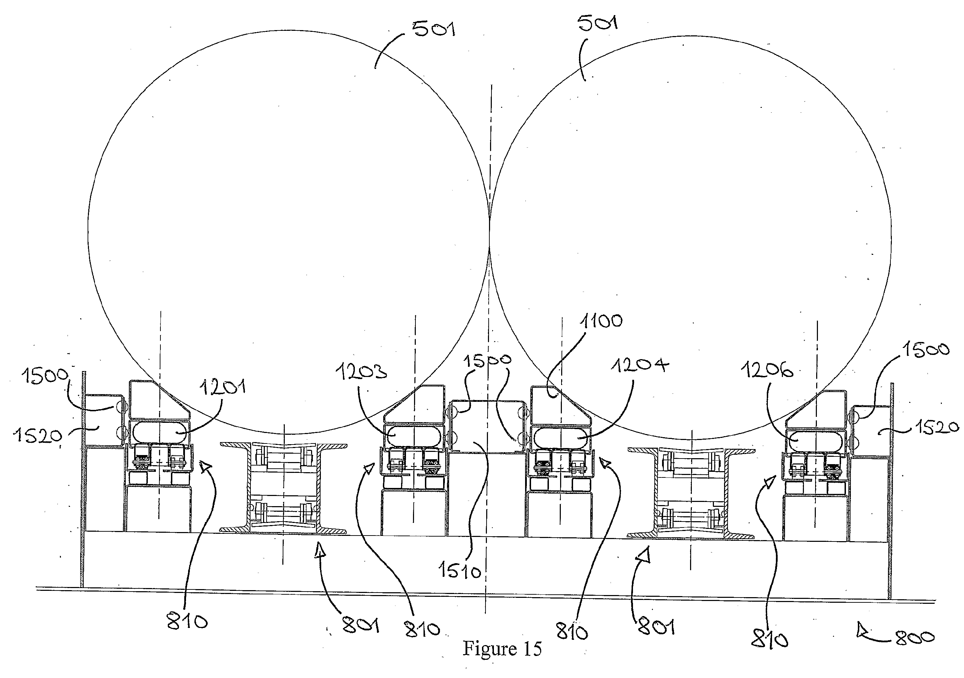

Figure 8 also shows skates 810 which may be inserted from skate guides (not shown, see Figure 15 for more details) into the trailer 100 and may then be retracted from the trailer 100, bringing reels 501 (the reels 501 are supported by the skates 810) out of the trailer 100 and onto the dock 800. The reels 501 are then transferred from the skates 810 to the conveyors 801 and sent to printing presses. The skates 810 will be discussed in more detail below.

To unload reels 501 from a trailer, the skates 810 are inserted into the trailer 100. The skates 810 are then raised so that the skates 810 lift the reels 501 off the trailer 100. The skates 810, bearing the reels 501, are then retracted back into the dock 800, so that the reels 501 are above the conveyors 801. The skates 810 are then lowered to transfer the reels 501 onto the conveyors 801. Finally, the conveyors 801 are used to transport the reels 501 to the printing presses.

In this embodiment, the dock 800 is provided with a skate extension/retraction mechanism (not shown) to insert the unloaded skates 810 into the trailer 100 and to withdraw the loaded skates 810 from the trailer 100. In this embodiment, the skate extension/retraction mechanism is electrically operated and controlled and uses a chain and a toothed sprocket, together with an electric motor, to cause the extension and retraction of the skates 810. Of course, inserting the unloaded skates 810 into the lorry 100 is relatively easy as they are not bearing significant weight whereas retracting the skates 810 from the trailer 100 is more difficult due to the weight of the reels 501.

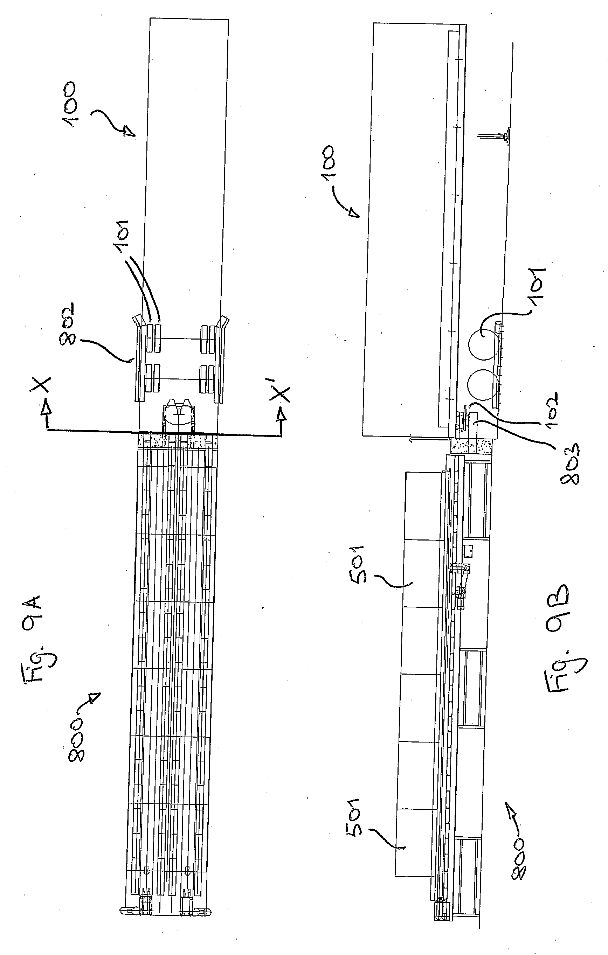

Figure 9A shows a top view of the trailer 100 mounted to the dock 800. As can be seen, the wheels 101 of the trailer 100 are guided by the wheel guides 802 relative to the dock 800.

Figure 9B shows that the fifth wheel pin 102 of the trailer 100 is captively received within the fifth assembly 803, thus aligning the trailer relative to the dock 800.

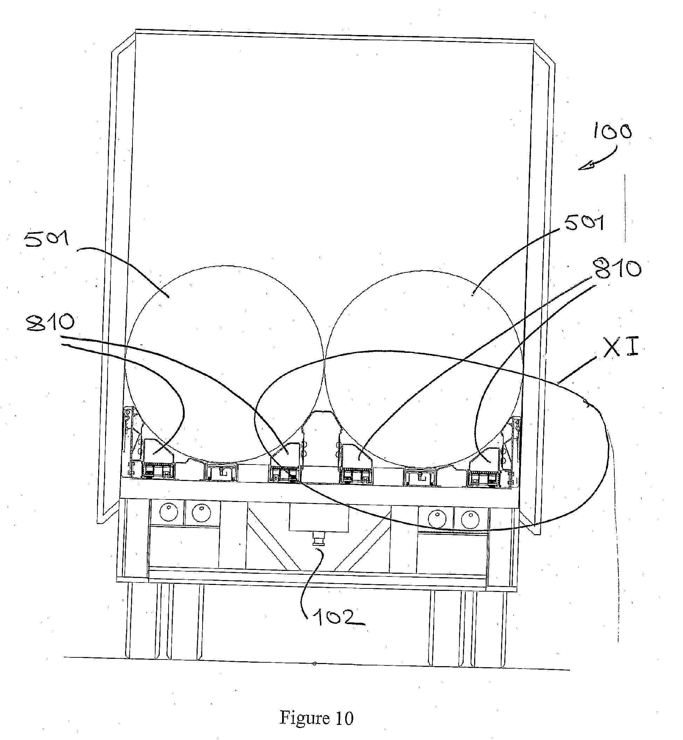

Figure 10 shows a view in the plane X-X' of Figure 9A from the dock towards the trailer 100. Figure 10 shows the trailer 100 after engagement with a dock 800. Figure 10 also shows a view of the trailer 100 once the four skates 810 (two skates on each side of the trailer 100 below each reel 501, for a total of four skates 810) have been inserted from the dock 800 into the skate guides 140 of the trailer 100. In this embodiment, the skates 810 extend substantially along the entire length of the trailer 100.

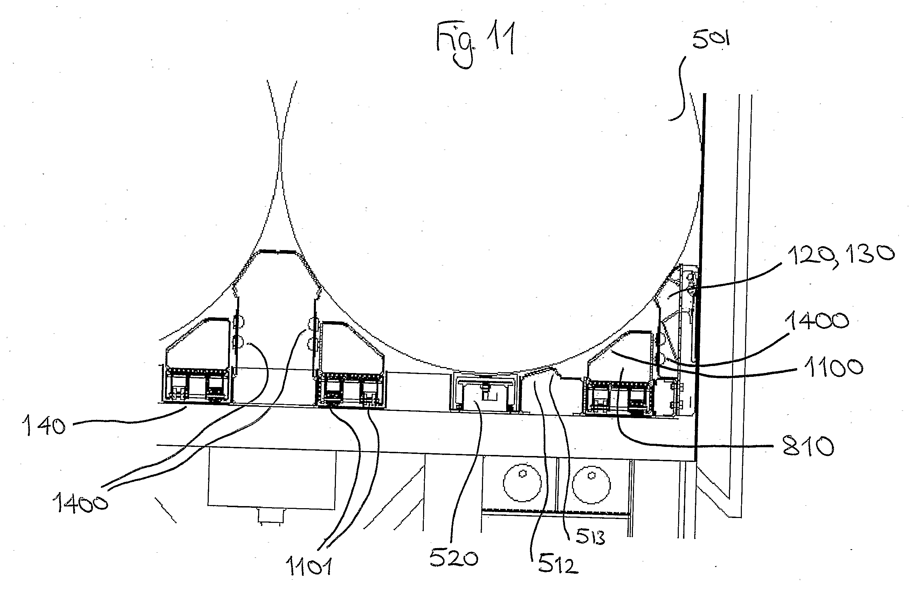

Figure 11 shows an enlarged view of region XI of Figure 10. As can be seen, an upper portion of a skate 810 has a skate surface 1100 which, as shown in Figure 11, is spaced apart from the reel 501 (in this embodiment by 16mm). The skate 810 has a plurality of skate rollers 1101 which, in this embodiment, are arranged side by side and at 7.6cm separations along the entire skate 810. Note that although there are two skates 810 underneath each reel 501, only one skate 810 is shown in Figure 11.

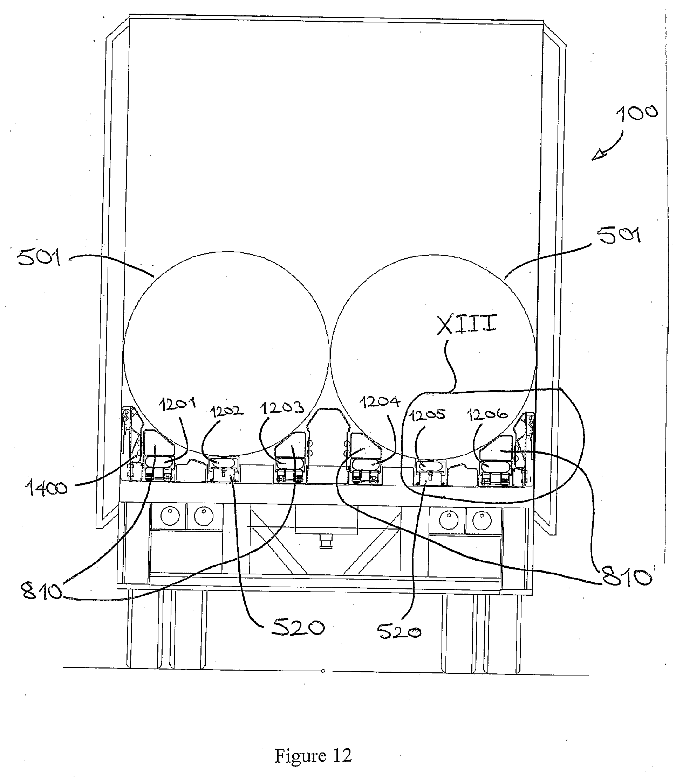

Figure 12 shows the reels 501 being lifted up off the centre chock 110 and off the fixed side chocks 120 and drop side chocks 130 by the skates 810 and the lift assist beams 520.

In this embodiment, the four skates 810 and the two lift assist beams 520 include a total of six pneumatic air sacs 1201, 1202, 1203, 1204, 1205, 1206 which are inflated in order to raise the lift assist beam 520 and the skate surfaces 1100. The air sacs extend substantially along the entire length of the skates 810 and lift assist beams 520 and are inflated at a pressure such that each of the skates 810 and lift assist beams 520 develops an upward force equivalent to 7,500kg. The six air sacs 1201-1206 can thus develop a total force equivalent to 45,000kg.

The skate air sacs 1201, 1203, 1204, 1206 are connected by coiled, extendable, air lines (not shown) via solenoid-operated pneumatic valves (not shown) to a reservoir (not shown) of high pressure air. The solenoid valves and the reservoir form part of the dock 800 and operate under the control of a computer (not shown). A coiled, extendable, air line (not shown) is connected from the dock 800 to the trailer 100 to allow the dock 800 to inflate the lift assist air sacs 1202, 1204.

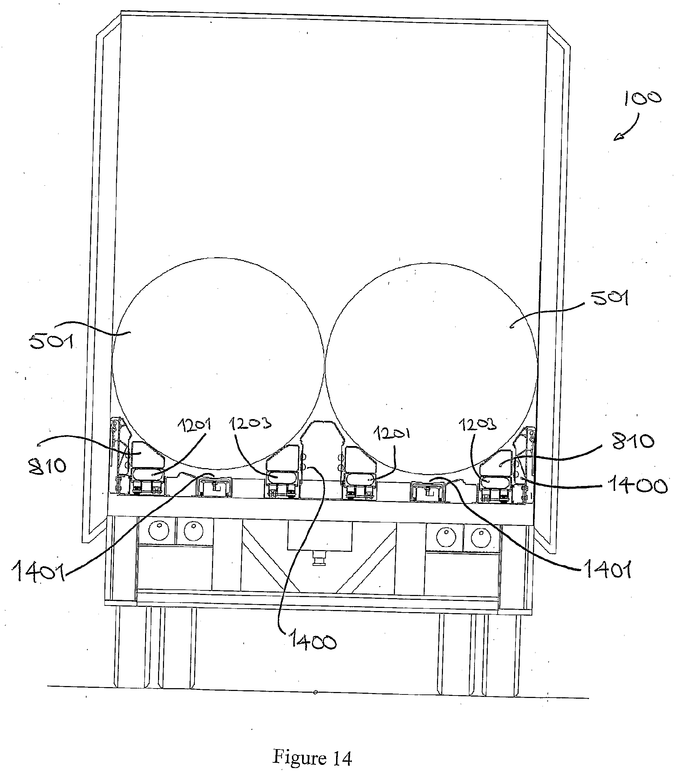

The dock 800, under computer control, simultaneously inflates the lift assist air sacs 1202, 1205 and the skate air sacs 1201, 1203, 1204, 1206. After lifting the reels 501, the dock 800 then uses a solenoid valve to disconnect the reservoir from the lift assist air sacs 1202, 1205, causing the lift assist beams 520 to be lowered. The dock 800 then checks a signal from a pressure tape switch (see Figure 14) to confirm that the lift assist beams 520 are no longer bearing any of the weight of the reels 501. Provided the lift assist beams 520 are not bearing the reels 501, the computer then causes the extension/retraction mechanism (not shown but discussed in connection with Figure 8) to retract the skates 810 and reels 501 towards the dock 800.

Each pair of skates 810 lifts up all of the reels on one side of the trailer 100. Figure 4 showed a total of six reels on each side of the lorry and thus each pair of skates 810 is used to lift up six reels 501, for a total of twelve reels for the four skates 810.

It will be recalled that a 2.211m long reel having a diameter of 1.27m has a weight of 2,200kg per reel. For a trailer 100 carrying a total of twelve such reels, the total weight of the reels 501 comes to a total of 26,400kg. Thus the skates 810 and lift assist beams 520 have a lifting capacity almost double that of the expected weight of the reels 501; this additional capacity improves reliability by ensuring that the reels 501 can always be lifted up off the centre chock 110 and fixed side chock 120 and drop side chocks 130 (even if the reels 501 have become to some extent wedged in between the centre chock 110 and the fixed side chocks 120 and the drop side chocks 130).

It can be seen that the reels 501 are still touching once they have been lifted up off the centre chock 110 and fixed side chocks 120 and drop side chocks 130.

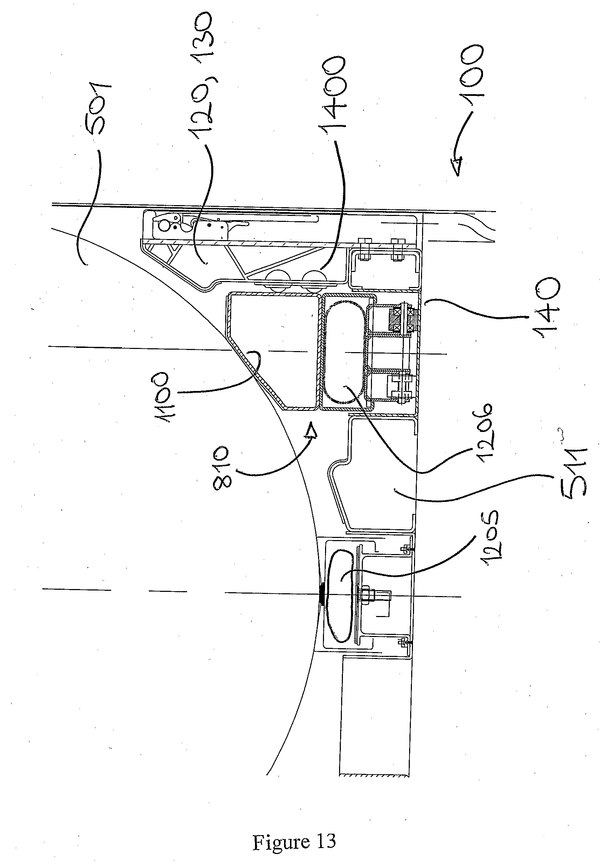

Figure 13 shows an enlarged view of region XIII of Figure 12. As can be seen, the lift assist beam 520 has been lifted up by the lift assist beam sac 1205 so that the bottom of the reel 501 is raised above the loading chock ridge 513 of the loading chock 511. Similarly, the skate air sac 1206 lifts the skate surface 1100 so that the skate surface 1100 is in contact with the underside of the reel 501. Due to the lifting up of the reel 501, there is, in this embodiment, a clearance of 16mm between the reel 501 and the fixed side chocks 120 and the drop side chocks 130. Similarly, there is also a clearance of 16mm between the reel 501 and the centre chock 110.

Figure 14 shows the trailer 100 after the lift assist sacs 1202, 1205 have been deflated. As shown by Figure 14, the entire weight of the reels 501 is being supported by the skates 810. The skate rollers 1101 allow the skates 810, together with the reels 501 supported on the skates 810, to be slided along the skate guides 140 and out of the lorry 100 and onto the dock 800.

Note that because the skates 810 are mounted on either side of the cylindrical line of the reels 501, each pair of skates 810 experiences a side-thrust which would, unless counteracted, push them apart. Thus the pair of skates 810 holding the left hand reels will be urged apart and the pair of skates 810 holding the right hand reels 501 will be urged apart.

The side thrust forces on the skates 810 are resisted by a plurality of roller ball casters 1400 which are mounted along the interior faces of the center chock 110, the fixed side chocks 120 and the drop side chocks 130. In this embodiment, roller ball casters 1400 allow relative motion in a plane: (i) the skates 810 move vertically relative to the roller ball casters 1400 when the skate air sacs 1201, 1203, 1204, 1206 are inflated, (ii) then, when the skates 810 are and reels 501 are slid out of the trailer 100, the skates 810 move horizontally (longitudinally) relative to the roller ball casters 1400.

A pressure tape switch 1401 is mounted on top of each of the lift assist beams 520. In this embodiment, each pressure tape switch 1401 runs along the entire length of its lift assist beam 520. Once the lift assist beams 520 have been lowered, there is no downward pressure/force from the reels 501 on the pressure tape switches 1401. In this embodiment, the pressure tape switches 1401 are used to provide an indication to the dock 800 that the reels 501 have been lifted clear of the centre chock 110, fixed side chocks 120 and drop side chocks 130, and that the skates 810 maybe retracted from the trailer 100 back into the dock 800.

Figure 15 shows a view of the reels 501 in the plane XV-XV' of Figure 8 after the skates 810 and reels 510 have been retracted from the trailer 100 to the dock 800. As can be seen, the reels 501 are still touching and are above the conveyors 801. The reels 501 are spaced apart from the conveyors 801 by a gap of, in this embodiment, 31mm.

As was the case for the trailer 100, the weight of the reels 501 on the skates 810 urges the skates 810 apart. The dock 800 is provided with a centre guide rail 1510 and with side guide rails 1520 which, in conjunction with roller ball casters 1500 on the interior faces of the centre guide rail 1510 and side guide rails 1520, counteract the sideways forces on each pair of skates 810 from the reels 501.

Once the skates 810 have been fully withdrawn from the trailer 100 back into the dock 800, the skate air sacs 1201, 1203, 1204, 1206 can be deflated, thus lowering the reels 501 onto the conveyors 801.

Figure 15 also shows that the dock 800 has skate guides (not provided with reference numerals) for guiding the skates 810. In this embodiment, the skate guides are generally "U" shaped channels in the surface of the dock 800.

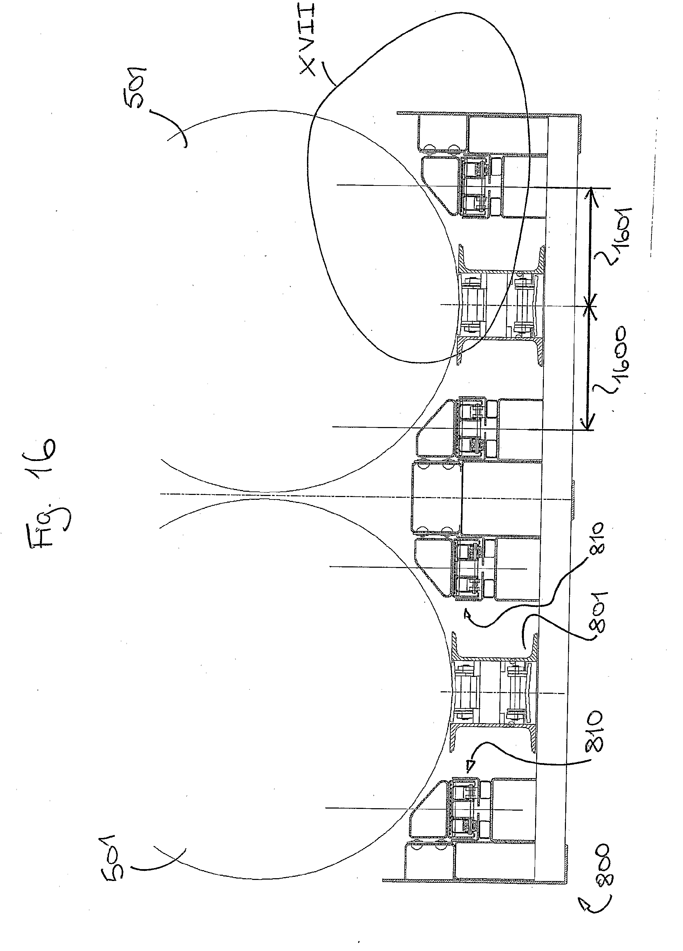

Figure 16 shows that, after the skates 810 have been lowered, the reels 501 rest on the conveyors 801 and also shows that the reels 501 become spaced apart by, in this embodiment, 20mm.

The reason why the reels 501 are spaced apart is to avoid the friction that would occur if the reels 501 were touching. The separation between the reels 501 allows, say, the reel 501 shown on the left hand side of Figure 16 to be moved axially along the left hand conveyor 801 independently of the reel 501 on the right hand side of Figure 16 (without the separation, it would be necessary to move both reels 501 simultaneously in the same direction along their conveyors 801). The separation between the reels 501 is achieved by, for each conveyor 801, off setting the centre of the conveyor 801 relative to pair of skates 810 associated with that conveyor 800. The conveyors 801 have a "V" cross-section; the V cross-section aligns the cylindrical axes of the reels 501 with the longitudinal axis of the conveyors 801.

With reference to the reel 501 shown on the right hand side of Figure 16 (and with reference to the two skates 810 associated with that reel 501), the distance between the left hand skate 810 and the centre of the conveyor 801 is designated by the reference numeral 1600. The distance between the centre of the conveyor 801 and the right hand skate 810 is designated by the reference numeral 1601. The distance 1600 is, in this embodiment, 10mm greater than the distance 1601, thus causing the right hand reel 501 to be displaced by 10mm to the right when it is transferred from its skates 810 to its conveyor 801. Similarly, the reel 501 shown on the left hand side of Figure 16 also moves 10mm to the left, thus providing the 20mm separation between the reels 501.

For the reel 501 shown on the right hand side of Figure 16, the clearance between the left hand skate 810 and the reel 501 is, in this embodiment, 28mm whereas the clearance between the reel 501 and the right skate is, in this embodiment, 16mm; this difference is due to the reel 501 being off-centre by 10mm relative to the skates 810.

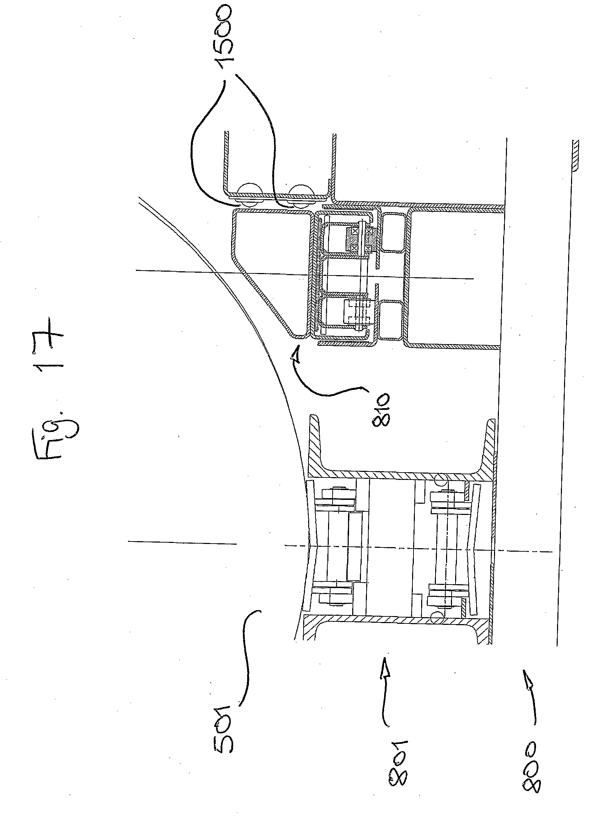

Figure 17 shows the region XVII of Figure 16 in more detail.

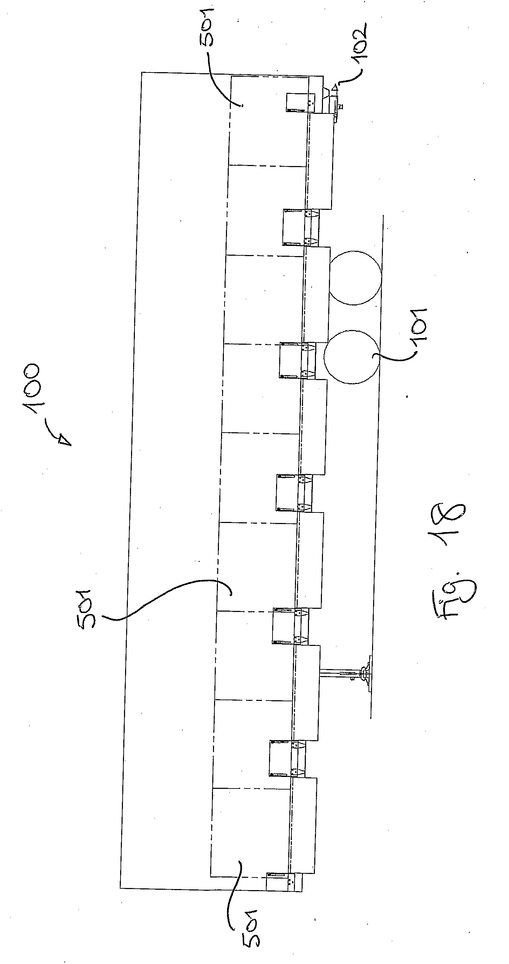

Figure 18 shows a view similar to that of Figure 4 but shows the trailer 100 being used to hold reels having a length of 1.465m.

### DESCRIPTION OF AN UNCLAIMED SECOND EMBODIMENT

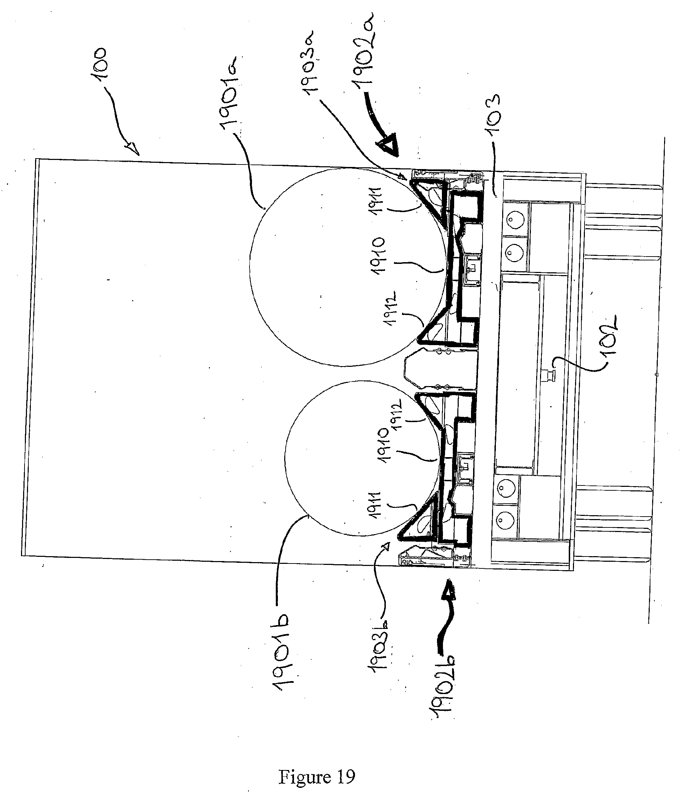

Figure 19 shows unclaimed adapters 1900 that may be used to transport other types of reel, for example gravure rolls 1901, in conjunction with the trailer 100 of Figure 1. As those skilled in the art will appreciate, gravure rolls may be used to print magazines and may be 4m long. In this embodiment, the gravure rolls 1901 are loaded and unloaded from side of the trailer 100.

Figure 19 shows a gravure roll 1901a and a gravure roll 1901b, of smaller diameter than the gravure roll 1901 a. Each of the gravure rolls 1901 is supported by a respective adaptor 1902a, 1902b (shown in thick lines). Although not apparent from the view shown by Figure 19, each of the adaptors 1902a, 1902b is made up of four identical adaptors spaced longitudinally along the trailer 100 so that each gravure roll 1901a, 1901b is supported at four regions along the length of the gravure roll.

The lower surfaces of the adaptors 1902 have protrusions which are dimensioned to fit into and cooperate with the skate guides 140. Thus the weight (and side thrusts when the trailer 100 follows a bend in a road) of the gravure rolls 1901 is transferred by the adapters 1902 to the bed 103 of the trailer 100 via the protrusions and the skate guides 140.

Each adapter 1902 has an adjustable portion 1903 to cater for different diameters of gravure rolls 1901 (as mentioned above, although only two adjustable portions 1903 are visible in the view shown by Figure 19, there are a total of eight adjustable portions, four being used to support each gravure roll 1901). The adjustable portions 1903 may be moved, relative to the adapters 1902, across the width of the trailer 100. In this embodiment a screw and nut mechanism is used to adjust the adjustable portions 1903.

As shown by Figure 19, once the adjustable portions 1903 have been adjusted for a given diameter of gravure roll 1901, the gravure roll 1901 is located by three contact regions 1910, 1911, 1912 (there are twelve contact regions in total for each gravure roll 1901: three for each of the four adapters 1902 used to support the gravure roll 1901). The contact region 1910 is between the gravure roll 1901 and a generally horizontal region of the adapter 1902. The contact region 1911 is between the adapter portion 1903 and the gravure roll 1901 (as shown, the adapter portion 1903 has a generally inclined surface for engaging with the gravure roll 1901). The contact region 1912 is between a generally inclined surface of the adapter 1902 and the gravure roll 1901.

In alternative embodiments of the second embodiment, the adapter 1902 is provided with the generally inclined surfaces for supporting a gravure roll 1901 at contact points 1911 and 1912 but not at contact point 1910. In yet further embodiments, the adapter 1902 is not provided with an adjustable portion but is instead provided with generally inclined surfaces that are fixed in position; adapters of different dimensions may be used for gravure rolls of different diameters.

### ALTERNATIVE UNCLAIMED EMBODIMENTS

In the first embodiment, chocks were used to hold the reels 501. A benefit of chocks is that they have surfaces which form part of a cylinder, thus spreading the weight of a reel 501 over a relatively large area and thus avoiding damage to reels 501 (particularly in the case of reels of paper) which could otherwise result from the weight of the reels. In alternative embodiments, other supports may be used to hold the reels 501. For example, in some embodiments, bars along the trailer 100 are provided (instead of chocks along the sides of the trailer 100).

The dock 800 used a single conveyor 801 to lift each reel 501. In an alternative embodiment, this arrangement may be swapped around so that a single skate is used in the trailer 100 to lift all of the reels 501 on one side of the trailer 100. The single skate is then used to transfer the reels 501 to a pair of conveyors at the dock (the two conveyors of the pair are spaced apart and arranged so that there is a conveyor on each side of the single skate). Compared to Figure 1, in this alternative embodiment the skate guide 140 is positioned in place of the lift assist beam 520 and the trailer 100 has a total of two, instead of four, skate guides 140. Whereas Figure 1 showed (for each reel 501) a single lift assist beam 520 directly underneath each reel, in this alternative embodiment a pair of lift assist beams may 520 be provided on either side of the skate guide 140.

The trailer 100 of Figure 1 was provided with both fixed side chocks 120 and drop side chocks 130. In some embodiments, it may not be necessary to allow the trailer 100 to be side loaded. In such embodiments, the drop side chocks 130 maybe dispensed with and a pair of fixed side chocks 120, each mounted on one side of the trailer 100 and extending substantially the entire length of the trailer 100, may be used to support the reels 501 during transport. In yet other embodiments, the "fixed" side chocks 120 may also be dropped. In such embodiments, lockable pillars may be used instead of some, or more preferably instead of all, of the fixed side chocks 120; the drop side chocks 130 are locked against the lockable pillars. Once the drop side chocks 130 have been lowered, the lockable pillars may be unlocked and lowered. An advantage of having lockable pillars is that one or both entire sides of the trailer 100 may be dropped, thus improving access for side loading and/or unloading.

Figure 6 showed that, once loaded, the reels 501 in the trailer 100 touch each other. In an alternative embodiment, the configuration of the centre chock 110 is such that the reels 501 do not touch. However, an advantage of having reels 501 that touch in the trailer 100 is that, for a trailer 100 having a given width, reels 501 of increased size can be accommodated in the trailer 100 compared to if the reels 501 do not touch.

Figures 14 and 15 showed the use of roller ball casters 1400, 1500 to allow the skates 810 to move vertically with respect to the trailer 100 (and vertically with respect to the dock 800) and to allow the skates 810 to move longitudinally (i.e. horizontally) relative to the trailer 100 and the dock 800. In an alternative embodiment: (i) the skates are provided with horizontally mounted rollers (i.e. the cylindrical axis of the rollers is horizontal) and (ii) the centre chock 110, fixed side chocks 120, drop side chocks 130, centre guide rail 1510 and side guide rails 1520 are provided with vertically mounted rollers. In this alternative embodiment, the horizontal rollers on the skates allow the skates to move vertically relative the trailer 100 and to the dock 800. Similarly, the vertically mounted rollers on the centre chock 110, fixed side chocks 120, drop side chocks 130, centre guide rail 1510 and side guide rails 1520 allow the skates to move longitudinally relative to the trailer 100 and relative to the dock 800. In a further embodiment, no rollers are provided on the skates but vertically mounted rollers are provided on the centre chock 110, fixed side chocks 120, drop side chocks 130, centre guide rail 1510 and side guide rails 1520. In this further embodiment, when the skates are raised or lowered then the skates skid against the vertically mounted rollers.

Figure 5 showed a trailer 100 having lift assist beams 520. In an alternative embodiment, lift assist beams 520 are not provided and instead the reels 501 are lifted solely by the air sacs 1201, 1203, 1204, 1206 within the skates 810. In such an alternative embodiment, the lift assist beams 520 and the loading chocks 511 may be replaced with a flat surface (not shown) or, more preferably, a cylindrical surface (also not shown) for bearing the weight of the reels 501 (the cylindrical surface may be similar to a "U" and extend along the length of the trailer 100, one on each side of the trailer 100, underneath the reels 501). In yet further embodiments, neither lift assist beams 520 nor flat/cylindrical surfaces are provided; instead, all of the weight of the weight of the reels 501 is borne by the centre chock 110, fixed side chocks 120 and drop side chocks 130.

In embodiments which do not include lift assist beams 520, proximity sensors may be used instead of pressure tape switches to detect whether or not the skates 810 have been successfully raised by the air sacs 1201, 1203, 1204, 1206. In one embodiment, three proximity sensors are provided along each skate guide 140, for a total of 12 proximity sensors. The proximity sensors are located at the front, middle and rear (relative to the longitudinal axis of the trailer 100) of each skate guide 140. When the skates 810 have been lowered then the proximity sensors detect the presence of the skates 810. When the skates 810 have been raised then the proximity sensors no longer detect the presence of the skates 810, thus confirming that the skates 810 have successfully raised the reels 501. An advantage of using three proximity sensors in each skate guide 140 (compared to using a single proximity sensor in each skate guide 140) is that the system can detect if a skate 810 has only been partially raised. For example, if for some reason a skate 810 has not been raised at one end (i.e. front or rear) or if a skate 810 has been raised at the front and rear but not in the middle, then the use of three proximity sensors allows such conditions to be detected.

In the first embodiment, air sacs 1201-1206 were used to raise and lower the skates 810 and lift assist beams 520. In alternative embodiments, electrical, mechanical or hydraulic techniques may be used to raise and lower the skates 810 and lift assist beams 520.

In the first embodiment, the skates 810 and the skate guides of the dock 800 had a length substantially equal to that of the entire trailer 100 so that two pairs of skates 810 were used to withdraw simultaneously all of the reels 501 from the trailer 100. In an alternative embodiment, the skates are shorter than the entire length of the trailer 100 and may, for example, have a length equal to that of the smallest reel size which is to be loaded/unloaded. Such an embodiment would allow the reels 501 to be loaded/unloaded one at a time, from alternate sides of the trailer 100.

The present invention may also be used to load/unload other goods such as reels of plastic film or reels of sheet steel. Where the invention is used to unload reels of paper 501 into a dock 800 of a printing press, the paper may then be sent on the conveyors 801 to an offset lithographic printing press. The paper is then printed and then cut (and, if necessary, folded, stitched and/or stapled) to form, for example, newspapers or books. The newspapers may then be bundled together and loaded onto vans for distribution.

In the first embodiment, the skates 810 were part of the dock 800 and were temporarily inserted into the trailer 100. In an alternative embodiment, the skates 810 are part of the trailer 100 and are temporarily inserted into the dock 800.

Where air sacs 1201-1206 are used, trailing lines for high pressure air maybe provided. The air supply for the lift assist sacs 1202, 1205 may come either from the trailer 100 or from the dock 800. In one embodiment, a line for high pressure air is connected from the dock 800 to the trailer 100. The dock 800, under computer control, simultaneously inflates the lift assist air sacs 1202, 1205 and the skate air sacs 1201, 1203, 1204, 1206. After lifting the reels 501, the dock 800 disconnects the high pressure air supply from the lift assist air sacs 1300 and checks a signal from the pressure tape switch 1401 before retracting the skates from the trailer 100 back into the dock 800.

The first embodiment showed a fifth wheel pin 102 mounted to the rear of the trailer 100. In alternative embodiments, the fifth wheel pin 102 is omitted. However, an advantage of the fifth wheel pin 102 is that it accurately aligns the rear of the trailer 100 to the dock 800. If a fifth wheel pin 102 is not used then it is important to ensure that the height of the bed 103 of the trailer 100 is accurately aligned with the height of the conveyors 801 of the dock 800. Similarly, it is important to align the skate guides 140 with the skate guides (see the discussion in connection with Figure 15 for further details) of the dock 800.

The first embodiment used skate air sacs 1201, 1203, 1204, 1206 to transfer the weight of the reels 501 from the skates 810 to the conveyors 801. In an alternative embodiment, the conveyors are provided with lifting means to enable the conveyors to rise up and lift the reels up off the skates 810.

In the first embodiment, the position of each conveyor 801 was offset relative to the skate guides associated with that conveyor by 10mm. In alternative embodiments, the offset in millimetres may be any integer in the range 1-50.

In the first embodiment, the skates 810 were provided with skate air sacs 1201, 1203, 1204, 1206. In an alternative embodiment, the skates 810 are not provided with skate air sacs 1201, 1203, 1204, 1206 but instead the skate guides 140 (and the skate guides of the dock 800) are provided with air sacs for lifting the floor of the skate guides (the skate rollers 1101 travel over the floor of the skate guides).

In the first embodiment, the skates 810 were provided with skate rollers 1101 to allow the skates 810 to move longitudinally relative to the skate guides 140. In other embodiments, roller ball casters are used instead of skate rollers 1101. In yet other embodiments, the skates 810 are not provided with skate rollers 1101 but instead the skate guides 140 (and the skate guides of the dock 800) are provided with rollers.

In the first embodiment, the drop side chocks 130 rotated about hinges. In an alternative embodiment, the drop side chocks do not rotate but may be removed from the trailer 100.

In the first embodiment, the reels 501 were transported horizontally. One benefit of transporting the reels horizontally is the lowering of the centre of gravity of a loaded trailer 100. In alternative embodiments, the trailer 100 and the dock 800 are modified so that instead of transporting reel horizontally, the reels are inclined relative to horizontal. For example, the reels may be inclined by 30° relative to horizontal. The first embodiment may also be used to transport reels that are oval (rather than circularly cylindrical is the case for the reels 501).

In the first embodiment, the dock 800 was provided with conveyors 801 to transport the reels 501 to a printing press. In an alternative embodiment, the dock 800 is not provided with conveyors and instead, after the skates 810 have been lowered, the reels 501 are rolled across the surface of the dock 800 to a printing press.

In the first embodiment, the skate guides 140 of the trailer 100 were shown as channels having a substantially square cross-section. The skate guides of the dock 800 were shown as substantially "L" shaped channels. In alternative embodiments, other arrangement may be used to guide the skates 810. For example, the skate guides may act as monorails to guide the skates 810.

## Claims

1. A vehicle (100) for transporting one or more substantially cylindrical items (501), wherein each cylindrical item has a cylindrical axis and a cylindrical surface, said vehicle (100) comprising:
a support (110, 120, 130) for supporting one or more of the cylindrical items (501);
one or more skate guides (140) for guiding one or more skates (810), wherein the one or more skate guides (140) each have a longitudinal axis that is substantially parallel to the cylindrical axis of the cylindrical item (510) supported by the support (110, 120, 130);
**characterised in that** said vehicle comprises one or more skates (810), the or each skate (810) being insertable and retractable along one of the skate guides (140) and having a first, raised, configuration arranged to support the cylindrical item (501) about its cylindrical axis during insertion or retraction of the skate (810) and a second, lowered, configuration arranged to disconnect the skate (810) from the cylindrical item (501) for insertion or retraction of the skate (810) alone, the or each skate being completely retractable from the vehicle; wherein, one or more bearing means comprising roller ball casters (1400) for receiving a side thrust from one or more skates during insertion or retraction along one of the skate guides (140) is provided.

2. A vehicle (100) according to claim 1, wherein the one or more skate guides (140) comprise wheel means (1400) to allow a skate (810) to move longitudinally relative to the one or more skate guides (140).

3. A vehicle (100) according to claim 1 or 2, wherein the one or more skates guides (140) each comprise lifting means for lifting one or more skates (810) into the raised configuration.

4. A vehicle (100) according to claim 1, 2 or 3, wherein the one or more skates (810) comprise wheel means for allowing the skates (810) to move longitudinally relative to the one or more skate guides (140).

5. A vehicle (100) according to claim 4, wherein the one or more skates (810) each comprise lifting means (1201, 1203, 1204, 1206) for lifting the one or more skates into the raised configuration.

6. A vehicle (100) according to any preceding claim, comprising two skate guides (140) wherein the two skate guides (140) are located relative to the support (110, 120, 130) so as to be spaced on each side of the cylindrical axis of a cylindrical item (501) supported by the support.

7. A vehicle (100) according to claim 3 or 5, wherein the lifting means comprises air sacs.

## Patentansprüche

1. Fahrzeug (100) zum Transportieren von einer oder mehreren im Wesentlichen zylindrischen Waren (501), bei dem jede zylindrische Ware eine Zylinderachse und eine Zylinderoberfläche besitzt, wobei das Fahrzeug (100) aufweist:
ein Auflager (110, 120, 130) zum Abstützen von einem oder mehreren der zylindrischen Waren (501);
eine oder mehrere Gleit- oder Rollführungen (140) zum Führen von einem oder mehreren Gleit- oder Rollelementen (810), wobei die ein oder mehreren Gleit- oder Rollführungen (140) jeweils eine Längsachse besitzen, die im Wesentlichen parallel zu der Zylinderachse der von dem Auflager (110, 120, 130) abgestützten zylindrischen Ware (510) ist;
**dadurch gekennzeichnet,**
**dass** das Fahrzeug ein oder mehrere Gleit- oder Rollelemente (810) aufweist, wobei das oder jedes Gleit-oder Rollelement (810) längs einer der Gleit- oder Rollführungen (140) einführbar und zurückziehbar ist und eine zum Abstützen der zylindrischen Ware (501) um ihre Zylinderachse während des Einführens oder Zurückziehens des Gleit- oder Rollelements (810) angeordnete erste, angehobene Konfiguration und eine zum Trennen des Gleit- oder Rollelements (810) von der zylindrischen Ware (501) zum Einführen oder Zurückziehen nur des Gleit- oder Rollelements (810) angeordnete zweite, abgesenkte Konfiguration besitzt, wobei das oder jedes Gleit- oder Rollelement vollständig aus dem Fahrzeug zurückziehbar ist; wobei ein oder mehrere Lagereinrichtungen mit Kugellagern (1400) zum Aufnehmen eines Seitendrucks von einem oder mehreren Gleit- oder Rollelementen während des Einführens oder Zurückziehens längs einer der Gleit- oder Rollführungen (140) vorgesehen sind.

2. Fahrzeug (100) nach Anspruch 1, in welchem die eine oder mehrere Gleit-oder Rollführungen (140) eine Radeinrichtung (1400) aufweisen, um einem Gleit- oder Rollelement (810) zu ermöglichen, sich längs relativ zu einem oder mehreren der Gleit- oder Rollführungen (140) zu bewegen.

3. Fahrzeug (100) nach Anspruch 1 oder 2, in welchem die eine oder mehrere Gleit- oder Rollführungen (140) jeweils eine Anhebeeinrichtung zum Anheben von einem oder mehreren der Gleit- oder Rollelemente (810) in die angehobene Konfiguration aufweisen.

4. Fahrzeug (100) nach Anspruch 1, 2 oder 3, in welchem die ein oder mehreren Gleit- oder Rollelemente (810) eine Radeinrichtung aufweisen, um den Gleit-oder Rollelementen (810) zu ermöglichen, sich längs relativ zu einer oder mehreren der Gleit- oder Rollführungen (140) zu bewegen.

5. Fahrzeug (100) nach Anspruch 4, in welchem das eine oder die mehreren Gleit- oder Rollelemente (810) jeweils eine Anhebeeinrichtung (1201, 1203, 1204, 1206) zum Anheben von einem oder mehreren der Gleit- oder Rollelemente in die angehobene Konfiguration aufweisen.

6. Fahrzeug (100) nach einem der vorstehenden Ansprüche, aufweisend zwei Gleit- oder Rollführungen (140), wobei die zwei Gleit- oder Rollführungen (140) relativ zum Auflager (110, 120, 130) angeordnet sind, dass sie auf jeder Seite der Zylinderachse einer auf dem Auflager abgestützten zylindrischen Ware (501) beabstandet sind.

7. Fahrzeug (100) nach Anspruch 3 oder 5, wobei die Anhebeeinrichtung Luftsäcke aufweist.

## Revendications

1. Un véhicule (100) pour transporter un ou plusieurs éléments substantiellement cylindriques (501), dans lequel chaque élément cylindrique a un axe cylindrique et une surface cylindrique, ledit véhicule (100) comprenant :
un support (110, 120, 130) pour supporter un ou plusieurs des éléments cylindriques (501); un ou plusieurs guides à patin (140) pour guider un ou plusieurs patins (810), dans lequel les un ou plusieurs guides à patin (140) ont chacun un axe longitudinal qui est substantiellement parallèle à l'axe cylindrique des éléments cylindriques (501) supportés par le support (110, 120, 130);
**caractérisé en ce que** ledit véhicule comprend un ou plusieurs patins (810), le un ou chaque patin (810) étant insérable et retirable le long d'un des guides à patin (140) et ayant une première configuration, haute, agencée pour supporter l'élément cylindrique (501) sur ses axes cylindriques durant l'insertion et le retrait du patin (810) et une seconde configuration, basse, agencée pour déconnecter le patin (810) de l'élément cylindrique (501) pour l'insertion ou le retrait du patin (810) seul, le ou chaque patin étant complètement retirable du véhicule; dans lequel, un ou plusieurs moyens de roulements comprenant des roulettes à roulement à billes (1400) sont prévus pour recevoir une butée latérale d'un ou plusieurs patins durant l'insertion ou le retrait le long d'un des guides à patins (140).

2. Un véhicule (100) selon la revendication 1, dans lequel les un ou plusieurs guides à patin (140) comprennent des moyens de roulement (1400) pour permettre à un patin (810) de se déplacer longitudinalement par rapport au un ou plusieurs guides à patin (140).

3. Un véhicule (100) selon la revendication 1 ou 2, dans lequel les un ou plusieurs guides, à patin (140) comprennent chacun des moyens de levage pour lever un ou plusieurs patins (810) dans la configuration haute.

4. Un véhicule (100) selon la revendication 1, 2 ou 3, dans lequel un ou plusieurs patins (810) comprennent des moyens de roulement pour permettre aux patins (810) de se déplacer longitudinalement par rapport à un ou plusieurs guides à patins (140).

5. Un véhicule (100) selon la revendication 4, dans lequel les un ou plusieurs patins (810) comprennent chacun des moyens de levage (1201, 1203, 1204, 1206) pour lever les un ou plusieurs patins dans la configuration haute.

6. Un véhicule (100) selon l'une quelconque des revendications précédentes, comprenant deux guides à patins (140) dans lequel les deux guides à patin (140) sont disposés par rapport au support (110, 120, 130) afin d'être espacés de chaque côté de l'axe cylindrique d'un élément cylindrique (501) supporté par le support.

7. Un véhicule (100) selon la revendication 3 ou 5, dans lequel les moyens de levage comprennent des sacs gonflables.
